# EUROPÄISCHE PATENTSCHRIFT

(11) **EP 1 698 707 B1**
(45) Veröffentlichungstag und Bekanntmachung des Hinweises auf die Patenterteilung: **07.11.2018**
(21) Anmeldenummer: 06450020.0
(22) Anmeldetag: 13.02.2006
(51) Int. Cl.: C22C 9/02, C22C 9/04, F16C 33/12

(54) **GLEITLAGER MIT BLEIFREIER LAGERMETALLSCHICHT AUF KUPFERBASIS MIT ZINN UND ZINK**
SLIDING BEARING WITH A LEAD FREE COPPER BASED BEARING METAL LAYER CONTAINING TIN AND ZINC
PALIER LISSE AVEC UNE COUCHE DE GLISSEMENT MÉTALLIQUE EXEMPTE DE PLOMB À BASE DE CUIVRE AVEC DE L'ÉTAIN ET DU ZINC

(30) Priorität: 03.03.2005 AT 3662005
(43) Veröffentlichungstag der Anmeldung: 06.09.2006
(73) Patentinhaber: Miba Gleitlager Austria GmbH, 4663 Laakirchen (AT)
(72) Erfinder: Mergen, Robert, 4813 Altmünster (AT)
(74) Vertreter: Patentanwaltskanzlei Hübscher

(56) Entgegenhaltungen:
- WO-A1-2005/080811
- CH-A- 233 421
- DE-B3- 10 308 779
- DE-C- 388 846
- DE-C- 756 035
- FR-A- 623 335
- US-A- 1 446 332
- US-A1- 2003 047 259

## Beschreibung

Die Erfindung bezieht sich auf ein Gleitlager mit einer stählernen Stützschale und mit einer auf die Stützschale aufgebrachten, bleifreien Lagermetallschicht auf Kupferbasis mit den Hauptlegierungselementen Zinn und Zink.

Gleitlagerwerkstoffe auf Kupferbasis mit Zinn und Zink als Hauptlegierungselemente sind seit langem bekannt, doch wurde diesen Lagerwerkstoffen zur Verbesserung der tribologischen Eigenschaften ein vergleichsweise hoher Anteil an Blei zulegiert. Die Toxizität von Bleilegierungen steht dem Einsatz solcher Lagerwerkstoffe aber zunehmend entgegen. Aus diesem Grunde fehlte es nicht an Versuchen, bleifreie Gleitlagerwerkstoffe auf Kupferbasis mit Zinn und Zink als Hauptlegierungselemente zu entwickeln, doch zeigte sich stets eine beeinträchtigte tribologische Eignung im Vergleich zu Lagerwerkstoffen aus einer Bleibronze. So wurde beispielsweise vorgeschlagen (DE 103 08 779 B3), eine bleifreie Kupferlegierung, die wenigstens 21,3 Gew.% Zink und höchstens 3,5 Gew.% Zinn aufweist, durch Zusätze von Magnesium, Eisen oder Kobalt, Nickel und Mangan oder Silicium in ihren Gleiteigenschaften zu verbessern, allerdings ohne durchschlagenden Erfolg. Bei einer anderen bekannten bleifreien Kupferlegierung mit Zink und Silicium als Hauptlegierungsbestandteile (DE 103 08 778 B3), wobei wenigstens 8,5 Gew.% Zink, 1 bis 5 Gew.% Silicium und höchstens 2 Gew.% Zinn mit geringfügigen Anteilen an Eisen oder Kobalt, Nickel und Mangan dem Kupfer zulegiert werden, ergeben sich ähnlich unzureichende Gleiteigenschaften. Wird schließlich bei einer Kupferlegierung beispielsweise mit einem Zinngehalt bis 6 Gew.% der Bleizusatz durch die Beigabe von Wismut in einer Größenordnung von 0,5 bis 2 Gew.% vermieden (EP 0 457 478 B1), so können zwar die tribologischen Eigenschaften verbessert werden, doch muss eine geringe Korrosionsbeständigkeit in Kauf genommen werden, die einem erfolgreichen Einsatz solcher Lagerwerkstoffe entgegensteht. Weiter ist aus dem Dokument CH 233 421 A ein Verbundwerkstoff für Lagerschalen mit einer auf Stahl aufgebrachten, bleifreien Bronzelegierung auf Kupfer-Zinn-Zink Basis bekannt, die als Zusätze bis zu 2% Mangan, bis zu 1% Eisen, bis zu 1% Nickel und bis zu 0,4% Phosphor aufweist. Als besonders geeignete Bronze wird eine Legierung bestehend aus 88% Cu, 5% Sn, 5% Zn, 1% Mn, 0,5% Fe, 0,3% Ni und 0,2% P genannt.

Der Erfindung liegt die Aufgabe zugrunde, eine Gleitlager der eingangs geschilderten Art mit einer bleifreien Lagermetallschicht auf Kupferbasis zu schaffen, die sowohl den tribologischen als auch den Festigkeitsansprüchen genügt, sodass solche Gleitlager insbesondere im Motorenbau eingesetzt werden können.

Die Erfindung löst die gestellte Aufgabe mit den Merkmalen des Anspruchs 1. Die erfindungsgemäße Lagermetallschicht weist einen Zinnanteil von 2,5 bis 11 Gew.% und einen Zinkanteil von 0,5 bis 5 Gew.% auf, wobei die Summe der Zinn- und Zinkanteile zwischen 3 und 13 Gew.% liegt.

Es hat sich in überraschender Weise gezeigt, dass bei den angegebenen Anteilsbereichen von Zinn und Zink die Anforderungen an die Gleiteigenschaften der Lagermetallschicht und an die mechanische Belastbarkeit des Lagers durchaus erfüllt werden können. Bei einer Beschränkung des Zinnanteils auf höchstens 11 Gew.% treten noch keine Aushärtungseffekte auf. Außerdem sind noch keine zu einer Versprödung Anlass gebende Phasenzusammensetzungen zu erwarten. Das Zink stellt einen geeigneten Ersatz für sonst zum Einsatz kommenden Phosphor dar, der sich aufgrund der Ausbildung intermetallischer Eisen-Phosphorverbindungen nachteilig auf den Verbund der Lagermetallschicht mit der stählernen Stützschale auswirken kann. Bleifreie Lagermetallschichten auf Kupferbasis mit den angegebenen Anteilen an Zinn und Zink stellen somit Legierungen dar, die sowohl gieß- als auch sintertechnisch gut beherrscht werden können, sodass sie sich besonders gut für die Gieß- oder Sinterplattierung auf Stahl eignen.

Um die Eigenschaften der Lagermetallschicht im Verbund mit der stählernen Stützschale zu verbessern, weist die Lagermetallschicht wenigstens ein weiteres Element aus einer Kobalt, Mangan und Zirkon enthaltenden Elementgruppe auf, und zwar in einer auf die eigensetzten Elemente dieser Gruppe bezogenen Gesamtkonzentration zwischen 0,1 und 1,8 Gew.%. In dieser Menge werden noch keine oder nur geringe in ihrer Wirkung vernachlässigbare Mengen an primär ausgeschiedenen Phasen gebildet, was sich vorteilhaft auf die Gießbarkeit, aber auch auf die Herstellung eines Sinterpulvers auswirkt. Durch die Beschränkung der Anteile dieser Legierungselemente können eine Festigkeitssteigerung bewirkende intermetallische Phasen erreicht werden, ohne eine Versprödung befürchten zu müssen. Außerdem ist bei manchen herstellspezifischen Wärmebehandlungen der Lagermetallschicht die Hemmung der Rekristallisation vor allem durch Zirkon hilfreich.

Erfindungsgemäß wird neben Kobalt, Mangan und Zirkon wenigstens auch ein Element aus der Gruppe Titan, Magnesium und Phosphor zulegiert, wobei die Gesamtkonzentration dieser Elemente zwischen 0,05 und 1,7 Gew.% liegen soll, und zwar bei einer maximalen Phosphorkonzentration von 0,08 Gew.%. Neben der Mitwirkung bei der Bildung von entsprechenden Ordnungszuständen im festen Zustand haben diese Elemente eine desoxidierende Wirkung und ermöglichen eine metallurgische Prozessführung mit einem Minimum an den sonst unvermeidbaren Phosphorzusätzen. Dazu kommt, dass vor allem Titan, aber auch Zirkon, bei im Einsatz der Gleitlager im Motorenbau zu erwartenden Betriebstemperaturen bis zu 150°C eine Versprödung durch Alterung hintanhält, was sich vorteilhaft auf die Standzeit der Gleitlager auswirkt.

In der Zeichnung sind bekannte Gleitlager mit einer Lagermetallschicht auf der Basis von Kupfer und Blei einem erfindungsgemäßen Gleitlager mit einer bleilosen Lagermetallschicht gegenüber gestellt. Es zeigen
- Fig. 1: die mittlere Grenzlast für das Auftreten eines Fressens in einem Blockdiagramm und
- Fig. 2: ein Diagramm des Verlaufs der Wechselbiegefestigkeit über der Anzahl der Lastwechsel.

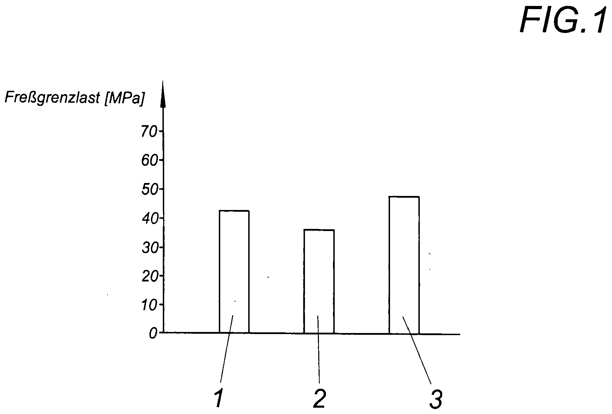

Es wurde jeweils eine Serie von mehreren Gleitlagern gleicher Bauart unter vergleichbaren Bedingungen einer statischen Belastung ausgesetzt, die stufenweise bis zum Auftritt eines Fressens erhöht wurde. Die für alle Gleitlager der jeweiligen Serie aus den beim Auftreten des Fressens in MPa gemessenen Grenzlasten berechnete durchschnittliche Fressgrenzlast wurde in das Blockdiagramm gemäß der Fig. 1 eingezeichnet. Die Lager hatten einen Durchmesser von 48 mm und eine Lagerbreite von 21 mm. Die Fressneigung wurde bei einer Umlaufgeschwindigkeit der Welle von 12,6 m/s und bei einer Arbeitstemperatur von 120°C festgestellt. Das Blockdiagramm 1, das für eine Lagermetallschicht aus CuPb20Sn2 ermittelt wurde, zeigt eine durchschnittliche Fressgrenzlast von 43 MPa. Für eine Lagermetallschicht aus CuPb15Sn7 ergibt sich gemäß dem Blockdiagramm 2 eine mittlere Fressgrenzlast von 37 MPa. Bei einer erfindungsgemäßen Lagermetallschicht, die wie bei den Vergleichslagern auf einer stählernen Stützschale aufgebracht wurde, ergab sich bei einer Zusammensetzung mit 4 Gew.% Zinn, 1 Gew.% Zink, 0,04 Gew.% Mangan, 0,08 Gew.% Zirkon, 0,05 Gew.% Phosphor, 0,11 Gew.% Magnesium, 0,05 Gew.% Titan, Rest Kupfer eine durchschnittliche Fressgrenzlast von 48 MPa, wie dies im Blockdiagramm 3 angedeutet ist.

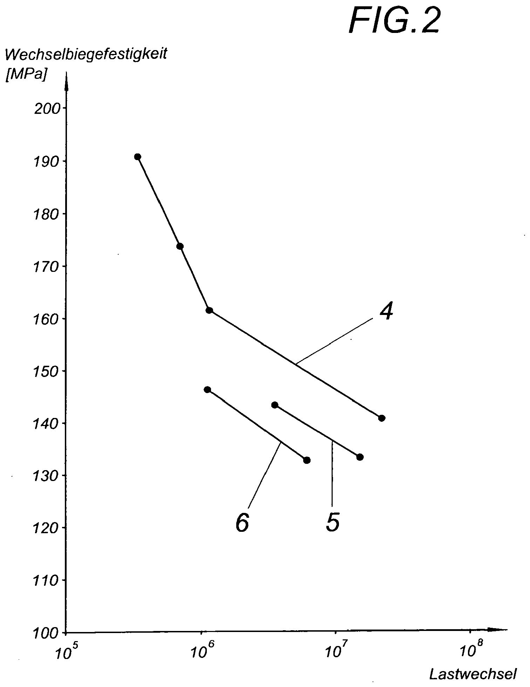

Im Diagramm gemäß der Fig. 2 sind auf der Ordinate die Biegewechselfestigkeit in MPa und auf der Abszisse die Anzahl der Lastwechsel in einem logarithmischen Maßstab aufgetragen, und zwar für die auch hinsichtlich der Fressneigung untersuchten Gleitlager. Es zeigt sich, dass die Biegewechselfestigkeit für erfindungsgemäße Gleitlager gemäß der Kurve 4 erheblich höher liegt als für die Gleitlager mit einer bleihältigen Lagermetallschicht. Die Kurve 5 gilt für die Gleitlager mit einer Lagermetallschicht aus CuPb20Sn2 und die Kurve 6 für die Gleitlager mit einer Lagermetallschicht aus CuPb15Sn7.

## Patentansprüche

1. Gleitlager mit einer stählernen Stützschale und mit einer auf die Stützschale aufgebrachten, bleifreien Lagermetallschicht auf Kupferbasis mit den Hauptlegierungselementen Zinn und Zink, wobei die Lagermetallschicht bei einem Summenanteil von Zinn und Zink zwischen 3 und 13 Gew.% aus einem Zinnanteil von 2,5 bis 11 Gew.%, einem Zinkanteil von 0,5 bis 5 Gew.%, wenigstens einem Element aus einer Kobalt, Mangan und Zirkon enthaltenden Elementgruppe in einer auf die eingesetzten Elemente dieser Gruppe bezogenen Gesamtkonzentration zwischen 0,1 und 1,8 Gew.% sowie zusätzlich wenigstens einem Element aus einer Titan, Magnesium und Phosphor enthaltenden Elementgruppe in einer auf die eingesetzten Elemente dieser Gruppe bezogenen Gesamtkonzentration zwischen 0,05 und 1,7 Gew.% bei einer maximalen Phosphorkonzentration von 0,08 Gew.% und Rest Kupfer besteht.

## Claims

1. Slide bearing having a steel support shell and having, applied to the support shell, a lead-free, copper-based bearing metal layer with the main alloy elements tin and zinc, wherein the bearing metal layer, in the case of a total proportion of tin and zinc between 3 and 13 wt. %, consists of a tin proportion of 2.5 to 11 wt. %, of a zinc proportion of 0.5 to 5 wt. %, of at least one element from an element group containing cobalt, manganese and zirconium, in a total concentration between 0.1 and 1.8 wt. % in relation to the elements of this group which are used, and additionally of at least one element from an element group containing titanium, magnesium and phosphorous, in a total concentration between 0.05 and 1.7 wt. % in relation to the elements of this group which are used, in the case of a maximum phosphorous concentration of 0.08 wt. % and the remainder copper.

## Revendications

1. Palier lisse avec une coquille de soutien en acier et avec une couche de roulement en métal sans plomb appliquée sur la coquille de soutien, à base de cuivre avec les éléments principaux d'alliage d'étain et de zinc, la couche de roulement en métal étant composée, avec une somme totale d'étain et de zinc entre 3 et 13% en poids, d'une part d'étain de 2,5 à 11% en poids, d'une part de zinc de 0,5 à 5% en poids, au moins d'un élément provenant d'un groupe d'éléments contenant du cobalt, manganèse et zircon, dans une concentration totale en rapport avec les éléments employés de ce groupe comprise entre 0,1 et 1,8% en poids, ainsi qu'en plus, au moins d'un élément provenant d'un groupe d'éléments contenant du titane, magnésium et phosphore, dans une concentration totale en rapport avec les éléments utilisés de ce groupe, comprise entre 0,05 et 1,7% en poids, en présence d'une concentration de phosphore maximale de 0,08% en poids et le reste, de cuivre.
